# EUROPEAN PATENT SPECIFICATION

(11) **EP 1 820 406 B1**
(45) Date of publication and mention of the grant of the patent: **29.10.2008**
(21) Application number: 07290071.5
(22) Date of filing: 19.01.2007
(51) Int. Cl.: A23K 1/00, A23L 1/30, A23L 2/02

(54) **Fermented drink, fermented food, and method for producing thereof**
Fermentiertes Getränk, fermentiertes Lebensmittel und Verfahren zu ihrer Herstellung
Boisson fermenteé, alimentaire fermenté et leur procédé d'obtention

(30) Priority: 24.01.2006 JP 2006014809; 24.01.2006 JP 2006014810
(43) Date of publication of application: 22.08.2007
(73) Proprietor: Kagome Co., Ltd, Aichi-ken (JP)
(72) Inventor: Okamoto, Takamitsu, Nasushiobara-shi, Tochigi-ken (JP); Nobuta, Yukihiro, Nasushiobara-shi, Tochigi-ken (JP); Yajima, Nobuhiro, Nasushiobara-shi, Tochigi-ken (JP)
(74) Representative: Desaix, Anne

(56) References cited:
- EP-A- 1 508 282
- WO-A-00/45653
- GB-A- 2 043 689
- DATABASE WPI Week 200447 Derwent Publications Ltd., London, GB; AN 2004-492905 XP002432650 & JP 2004 187501 A (MARUKOME KK) 8 July 2004 (2004-07-08)

## Description

### BACKGROUND OF THE INVENTION

### 1. Field of the Invention

The present invention relates to fermented food or drink products, which use a vegetative raw material as a main raw material and are produced by fermenting the materials, and methods for producing such fermented food or drink products.

### 2. Description of the Related Art

Lactic acid bacteria have been used for producing various fermented food and drink products, and some of the bacteria *per se* have excellent physiological activities, such as an intestinal function controlling effect and disease germ growth inhibition. Excellent food and drink products beneficial to health may be produced by not only utilizing such useful lactic acid bacteria but also by including them in the fermented food or drink in a living state.

On the other hand, it is known that strains of lactic acid bacteria that belong to *Lactobacillus brevis* (hereinafter simply abbreviated as *Lactobacillus brevis*) show especially potent activity against stress and have excellent physiological activities over an extremely wide range. Reports have been made so far on their use in, for example, antiallergic agents, interferon production enhancers, antigastritis agents and antiulcer agents, hepatitis treatment/prevention agents, tumor growth inhibitors, antitumor activators, and γ-aminobutyric acid production.

As described above, since *Lactobacillus brevis* is very useful lactic acid bacteria which can readily reach the intestine and survive for a long time if taken while alive, the development of fermented food and drink products which include *Lactobacillus brevis* in a living state is desired to improve health. Various methods for producing such fermented food and drink products have been proposed and include, for example, a method which utilizes a medium used for an ordinary lactic acid fermentation in which milk is the sole raw material, and a method in which glutamic acid or a glutamic acid-containing material is added to vegetative raw materials, such as fruits, vegetables, juices of fruits or vegetables, soybean milk, and wort, and is fermented to produce a fermented food or drink product (refer to Japanese Laid-Open Patent Application No. 2004-215529).

However, if a fermentation medium in which milk is the sole raw material is used, there are problems in that the multiplication of *Lactobacillus brevis* is only about five times after 48 hours causing insufficient fermentation, and a fermented food or drink product of good quality cannot be obtained.

Also, even if fermented food or drink in which fermentation has sufficiently progressed are produced by using a fermentation medium in which one other than milk alone is used as a raw material, fermentation of the food or drink continues to proceed during refrigeration storage since *Lactobacillus brevis* has a strong resistance against stress, and this causes changes in taste and flavor of the products and deterioration in quality.

Moreover, the purpose of the method described in Japanese Laid-Open Patent Application No. 2004-215529 is to produce γ-aminobutyric acid having various useful physiological activities by fermentation and obtain a fermented food or drink product containing the amino acid. In this method, there is also a problem in that food or drink having undesired taste, flavor, etc. is obtained due to undesired effects of glutamic acid remaining in the fermentation medium or γ-aminobutyric acid contained in the food or drink obtained.

EP 1508282 A1 describes a process for producing a juice based drink or a drink concentrated with fruits wherein the juice based drink or concentrate of fruits are fermented at a starting pH between 3.8 and 6.6 until the pH of the fermented product is below 3.5. *Lactobacillus* is used in the fermentation process.

### SUMMARY OF THE INVENTION

The present invention has been achieved in consideration of the above situation, and an object of the present invention is to provide fermented food or drink products having excellent taste, flavor, and preservability which are obtained by fermenting a medium which includes vegetative raw material as a main raw material, by using *Lactobacillus brevis,* and which contain the number of living cells of the *Lactobacillus brevis* of 1x10⁸ cfu/ml or greater. In the fermented food or drink products, the number of living cells does not change significantly after being preserved at 10°C for three weeks, and the excellent taste and flavor of the fermented food or drink do not deteriorate.

That is, in order to solve the above-mentioned problems, the first aspect of the present invention is a method for producing a fermented food or drink product, including: adding a strain of lactic acid bacteria which belongs to *Lactobacillus brevis* to a medium whose pH has been adjusted to 4.6 to 7.0, the medium including: a vegetative raw material in an amount of 50% or more converted to a juice thereof; and 0.2 to 2.0% by mass of malic acid or 2.0 to 20.00% by mass of fructose, in order to ferment the medium so that the pH of the medium becomes 4.3 or greater and less than 7.0; and adjusting pH of a fermented product to 3.3 to 4.1 by using an acid.

Also, the second aspect of the present invention is the method for producing a fermented food or drink product according to the first aspect, further including: lowering a temperature of the fermented product.

The third aspect of the present invention is the method for producing a fermented food or drink product according to the first or second aspect, wherein the strain of lactic acid bacteria which belong to *Lactobacillus brevis* is *Lactobacillus brevis* FERM BP4693 strain.

The fourth aspect of the present invention is the method for producing a fermented food or drink product according to any one of the first to third aspects, wherein the medium further includes 0.1 to 20% by mass, as a non-fat solid content, of milk.

The fifth aspect of the present invention is the method for producing a fermented food or drink product according to any one of the first to fourth aspects, wherein the medium contains 0.2 to 0.45% by mass of malic acid.

The sixth aspect of the present invention is a fermented food or drink product which is produced by the method described in the first to fifth aspects.

The seventh aspect of the present invention is a fermented food or drink product according to the sixth aspect which is used for animal feed.

According to the production method of the present invention, it becomes possible to increase the number of living cells of *Lactobacillus brevis* in the obtained fermented products to be 1×10⁸ cfu/ml or greater, and the change in the number of living cells of *Lactobacillus brevis* may be prevented after storing the fermented products at 10°C for three weeks after the production thereof. Accordingly, it becomes possible to provide a fermented food or drink product having excellent preservability as well as taste and flavor.

### DETAILED DESCRIPTION OF THE INVENTION

The invention summarized above and defined by the enumerated claims may be better understood by referring to the following detailed description. This detailed description of particular preferred embodiments, set out below to enable one to practice and use particular implementation of the invention, is not intended to limit the enumerated claims, but to serve as particular examples thereof.

Hereinafter, the present invention will be explained in detail.

Examples of the vegetative raw materials that may be used in the present invention include: vegetables, fruits, grains, and beans.

Examples of the vegetables may include: tomato, sweet pepper, carrot, cabbage, Chinese cabbage, lettuce, white radish, spinach, kale, onion, egg plant, PETIT VERT (Trademark, a cross-breed of kale and Brussels sprouts), shiitake mushroom, and shimeji mushroom.

Examples of the fruits may include: grapefruit, orange, apple, grape, strawberry, pineapple, kiwi fruit, guava, mango, acerola, blueberry, pomegranate, peach, pear, papaya, melon, water melon, banana, and fig.

Examples of the grains may include: wheat (malt), and rice, and examples of the beans may include: soy bean, and peas.

According to the present invention, these vegetative raw materials may be used singularly or in combination of two or more. The combination may be suitably selected according to the object of the product.

According to the present invention, the above-mentioned vegetative raw materials may be used in a state of a squeezed liquid, or ground or pulverized form, or may be processed to be concentrated, diluted, or dried materials. For example, in the case of soy bean, it may be used in a form of soy bean milk.

With regard to the vegetative raw materials used in the present invention, when a medium containing malic acid is used, it is preferable, among those described above, to use at least one selected from the group consisting of carrot and PETIT VERT (Trademark) by taking into account the pH and amount of malic acid contained. These vegetables contain a suitable amount of malic acid, and the pH of processed products thereof is close to the pH required for the fermentation medium prior to the fermentation. Accordingly, by using these vegetables, it becomes easy to adjust the pH of the fermentation medium and the amount of malic acid contained therein. Also, by taking into account the fermentability and the general versatility of fermented liquid, it is preferable to use clear juice made of at least one selected from the group consisting of carrot and PETIT VERT (Trademark). Although any of concentrated juice, non-concentrated juice, clear juice, etc., may be utilized according to the present invention, it is preferable to use the clear juice since various materials may be mixed therein during the production of a fermented food or drink product, which increases the range of use thereof. Note that the term "clear juice" used herein means one which is clear and not cloudy. Such juice may be obtained by, for example, carrying out a filtration process using an UF membrane.

With regard to the vegetative raw materials used in the present invention, when a medium containing fructose is used, it is preferable, among those described above, to use at least one selected from the group consisting of tomato, sweet pepper, PETIT VERT (Trademark), and watermelon by taking into account the pH and amount of fructose contained. These vegetables contain a suitable amount of fructose, and the pH of processed products thereof is close to the pH required for the fermentation medium prior to the fermentation. Accordingly, by using these, it becomes easy to adjust the pH of the fermentation medium and the amount of fructose contained therein. Also, by taking into account the fermentability and the general versatility of the fermented liquid, it is preferable to use clear juice made of at least one selected from the group consisting of tomato, sweet pepper, PETIT VERT (Trademark), and watermelon. Similar to the malic acid-containing medium, although any of concentrated juice, non-concentrated juice, clear juice, etc., may be utilized for the fructose-containing medium according to the present invention, it is preferable to use the clear juice since various materials may be mixed therein during the production of a fermented food or drink product, which increases the range of use thereof. As described above, the term "clear juice" means one which is clear and not cloudy and such juice may be obtained by, for example, carrying out a filtration process using an UF membrane.

According to the present invention, the above-mentioned vegetative raw material is contained in the fermentation medium in the amount of 50% or more, preferably in the amount of 75% or more, when it is converted to a juice thereof. Here, the phrase "converted to a juice" means a conversion to a concentrated juice of a vegetative raw material which is not subjected to any process which accompanies a change in concentration of the juice, such as a concentration process or dilution process. Accordingly, it is possible that the medium contains the vegetative raw material in the amount of 100% or more if a concentrated product of a vegetative raw material is used, and the concentration may be suitably adjusted based on the objects.

According to the present invention, when a medium containing malic acid is used, the amount of malic acid contained in the fermentation medium is in the range of 0.2 to 2.0% by mass, preferably 0.2 to 0.45% by mass. Although carbonic acid produced by the fermentation, the amount of which depends on the amount of malic acid contained in the fermentation medium, is to be contained in the fermented product, it becomes possible to reduce the amount of carbonic acid in the fermented product by adjusting the amount of malic acid contained to be in the range of 0.2-0.45% by mass, and the obtained fermented food or drink has better characteristics, such as taste and flavor, with less stimulation to the tongue. Also, it is preferable to adjust the amount of malic acid to be within the above-mentioned range using the malic acid contained in the vegetative raw material by, for example, diluting it with distilled water, etc., after suitably processing the vegetative raw material. If it is difficult to adjust the amount of malic acid by using only the vegetative raw material, it is possible to add malic acid from another source as long as it does not deteriorate the effect of the present invention. When malic acid from another source is added, it is preferable to use an aqueous solution of the malic acid. Since *Lactobacillus brevis* can assimilate malic acid, an excellent fermentation process may be carried out by including a suitable amount of malic acid in the medium in the manner as explained above.

According to the present invention, when a medium containing fructose is used, the amount of fructose contained in the fermentation medium is in the range of 2.0 to 20.0% by mass, and it is preferable to adjust the amount of fructose to be within the above-mentioned range using the fructose contained in the vegetative raw material by, for example, diluting it with distilled water, etc., after suitably processing the vegetative raw material. If it is difficult to adjust the amount of fructose using only the vegetative raw material, it is possible to add fructose from another source as long as it does not deteriorate the effect of the present invention. When fructose from another source is added, it is preferable to use an aqueous solution of the fructose. Since *Lactobacillus brevis* can assimilate fructose, an excellent fermentation process may be carried out by including a suitable amount of fructose in the medium in the manner as explained above.

According to the present invention, it is possible to add milk to the above-mentioned medium in an amount of 0.1 to 20% by mass as a non-fat solid content. By adding milk to the medium, it also becomes possible to carry out an excellent fermentation process using *Lactobacillus brevis* to increase the number of living cells to be contained in the fermented products. Examples of milk which may be used for this purpose include: milk of animals, skim milk, fermented milk, and enzyme-treated products thereof. Among these, it is preferable to use skim milk.

With regard to adding milk, the effect thereof may not be observed if the amount of milk is less than 0.1% by mass as a non-fat solid content. Also, if the amount of milk added is greater than 20% by mass as a non-fat solid content, the fermentation process cannot proceed in a satisfactory manner due to the stress applied to *Lactobacillus brevis,* and the taste or flavor of the fermented products obtained tends to be deteriorated. In addition, the preparation of the fermentation medium itself tends to become difficult in such cases.

According to the present invention, the pH of the fermentation medium is adjusted to be within the range of 4.6-7.0 prior to the fermentation. It is preferable that the pH be adjusted within the above-mentioned range, for example, by diluting with distilled water, etc., without using a pH adjustor after suitably processing the vegetative raw material, or by suitably adjusting the kind or amount of the vegetative raw material. If it is necessary to use a pH adjustor, one which is generally used for foods may be added as long as it does not deteriorate the effect of the present invention, and the kind thereof is not particularly limited. Examples of a preferable acid include citric acid, and examples of a preferable base include potassium carbonate. If the pH adjustor used is in a form of crystals, it is preferable to use an aqueous solution thereof.

Although the sugar content (hereinafter abbreviated as Brix) of the fermentation medium is not particularly limited, it is preferably within the range of 6 to 24%.

With regard to the malic acid or fructose content of the medium used for fermentation, these may be adjusted, together with the pH thereof, for example, by diluting the medium with distilled water, etc., after suitably processing the above-mentioned vegetative raw material. However, the method for adjusting the malic acid or fructose content, or pH of the medium is not particularly limited, and malic acid or fructose from another source, or a pH adjustor may be added to the medium, if necessary. It is preferable that the fermentation medium prepared in the manner mentioned above be heat sterilized under predetermined conditions prior to inoculation with *Lactobacillus brevis.*

Examples of water used in the present invention include distilled water, ion-exchanged water and so forth.

Examples of *Lactobacillus brevis* used in the present invention include *Lactobacillus brevis* FERM BP-4693 strain (hereinafter abbreviated as *Lactobacillus brevis* BP-4693), and *Lactobacillus brevis* JCM1059 strain (hereinafter abbreviated as *Lactobacillus brevis* JCM 1059). Among these, *Lactobacillus brevis* BP-4693 strain is preferable from the viewpoint of carrying out a more desirable fermentation process and easiness of obtaining a sufficient number of living cells. Note that *Lactobacillus brevis* may be used singularly or in a mixture of two or more kinds.

*Lactobacillus brevis* BP-4693 is available from National Institute of Advanced Industrial Science and Technology, International Patent Organism Depository, and *Lactobacillus brevis* JCM1059 is available from RIKEN BioResource Center.

It is preferable that *Lactobacillus brevis* be used for the fermentation of medium after being precultivated. The precultivation may be carried out by using conventional methods. Examples of such methods include one in which a commercially available medium for lactic acid bacteria is dissolved in distilled water so that the concentration thereof becomes a predetermined concentration and, after sterilizing it by using an autoclave, *Lactobacillus brevis* is inoculated with the medium to be precultivated for a predetermined period.

Fermentation of the medium using *Lactobacillus brevis* may be carried out by using conventional methods. For example, the above-mentioned precultivated product may be inoculated so as to cultivate *Lactobacillus brevis.* The amount of inoculation is preferably in the range of 0.1 to 10% by volume, the temperature during the cultivation is preferably in the range of 20 to 40°C, and the time period for the cultivation is preferably 12 to 72 hours. According to the present invention, it is important to control the degree of fermentation in order to obtain a fermented food or drink having excellent taste, flavor, and preservability, and a fermented food or drink having excellent quality may be obtained if the above-mentioned conditions are met.

According to the present invention, the pH of the fermented product at the end of the fermentation is 4.3 or greater and less than 7.0. If the pH is within this range, a suitable degree of fermentation may be obtained in order to produce a fermented food or drink which has excellent taste, flavor, and preservability.

Also, according to the present invention, the pH of the fermented product after the completion of fermentation is adjusted to be 3.3 to 4.1, preferably 3.6 to 4.0, by using an acid. By adjusting the pH of the fermented product in the manner described above, it becomes possible to stop the fermentation of the medium so as to prevent changes in taste or flavor of the fermented products during preservation thereof.

According to the present invention, types of acid used are not particularly limited as long as the acid is generally applicable to food. Examples the acid include acidic organic compounds, such as lactic acid, citric acid, acetic acid, and malic acid, and acidic inorganic compounds, such as phosphoric acid, At lease one of these may be arbitrarily selected and used. As explained above, however, it is preferable to use lactic acid if milk is added to the fermentation medium in an amount of 0.1 to 20% by mass in terms of non-fat solid component. Also, if the acid used is in the form of crystals, it is preferable to add an aqueous solution thereof to the fermented product.

According to the present invention, a subsidiary material may be added to the fermented product after the completion of the fermentation in order to coordinate the taste, flavor, and preservation stability thereof as long as it does not deteriorate the effect of the present invention. In such case, the addition of the subsidiary materials may be carried out either prior to or after the adjustment of pH of the fermented product. The type of subsidiary materials is not particularly limited as long as they are generally applicable to foods, and examples thereof include various flavor enhancers and sugar solutions. Also, one or more kinds of subsidiary materials may be used at the same time.

Moreover, it is preferable to lower the temperature of the fermented products after the completion of the fermentation. It becomes possible to more effectively suppress the changes in taste and flavor of the fermented food or drink during the preservation by lowering the temperature of the fermented product to stop the fermentation of the medium. The temperature at that time is preferably in the range of 0 to 15°C. More specifically, the temperature of the fermented product may be reduced to 10°C, for example, after cultivating at 30°C. Also, it is preferable to carry out the cooling process rapidly after the completion of the fermentation.

Furthermore, although the order of the pH adjustment and the cooling process may be determined arbitrarily, it is preferable to carry out the cooling process prior to the pH adjustment by taking into account the preservation stability of the fermented food or drink obtained. In addition, the above-mentioned addition of subsidiary materials may be performed before or after the cooling process.

The fermented product of the present invention whose pH has been adjusted to be in the range of 3.3 to 4.1 contains the living cells of *Lactobacillus brevis* of 1×10⁸ cfu/ml or greater, and the number of living cells does not change significantly even after preserving at 10°C for three weeks. Accordingly, excellent taste or flavor of the food or drink immediately after the fermentation thereof may be maintained.

Also, the obtained fermented product may be directly used as a fermented food or drink. Alternatively, suitable additives may be added, if necessary, or the product may be appropriately processed to be a fermented food or drink.

The fermented food or drink of the present invention may be obtained by using the methods described above. The fermented food or drink is also suitable as feed for animals.

### EXAMPLES

Hereinafter, the present invention will be explained in detail with reference to Examples. However, it is apparent that the present invention is not limited to these Examples.

Methods for producing the fermented food or drink, and evaluation of the characteristics of obtained food or drink will be explained below.

### • Preparation of Precultivation Product

Commercially available medium for lactic acid bacteria (M.R.S medium, a product of OXOID Limited) was dissolved in distilled water so that its concentration became 62 g/L, and then it was sterilized by using an autoclave at 121°C for 15 minutes. Then, *Lactobacillus brevis* BP-4693 or *Lactobacillus brevis* JCM 1059 was inoculated with the sterilized medium, and this was precultivated at 30°C for 18 hours.

### • Preparation of Fermentation Medium (1)

Concentrated carrot juice of pH 5.5 and of Brix. 42% was diluted with distilled water so as to adjust its pH to 5.7, the malic acid content to 0.3% by mass, and the Brix. to 12%. Then, the pH, malic acid content, and Brix. were adjusted again as shown in Tables 1 and 2 (refer to "Conditions for Fermentation Medium"). At that time, as shown in Tables 1 and 2, skim milk was added to some of Examples, and skim milk and/or glutamic acid was added to some of Comparative Examples. Then, the fermentation medium was prepared by sterilizing in an autoclave at 121°C for 15 minutes. When clear carrot juice was to be used as the vegetative raw material, the above-mentioned concentrated carrot juice was diluted with distilled water, and this was subjected to an UF membrane filtration treatment by using a known method to obtain clear juice. Then, the pH, malic acid content, and Brix. thereof were adjusted.

### • Preparation of Fermentation Medium (2)

Concentrated tomato juice of pH 4.3 and of Brix. 20% was diluted with distilled water so as to adjust its pH to 4.4, the fructose content to 2.5% by mass, and the Brix. to 12%. Then, the pH, fructose content, and Brix. were adjusted again as shown in Tables 3 and 4 (refer to "Conditions for Fermentation Medium"). At that time, as shown in Tables 3 and 4, skim milk was added to some of Examples, and skim milk and/or glutamic acid was added to some of Comparative Examples. Then, the fermentation medium was prepared by sterilizing in an autoclave at 121°C for 15 minutes. When clear tomato juice was to be used as the vegetative raw material, the above-mentioned concentrated tomato juice was diluted with distilled water, and this was subjected to an UF membrane filtration treatment by using a known method to obtain clear juice. Then, the pH, fructose content, and Brix. thereof were adjusted.

### • Preparation of Vegetative Fermented Liquid

Subsequently, 1% by volume of the above-mentioned precultivated product was inoculated with the above-mentioned fermentation medium, and the fermentation process was carried out by incubating it at 30°C for 18 hours (108 hours for Comparative Examples 2 and 2'). After the completion of incubation, the obtained fermentation medium was immediately cooled to 10°C to obtain a vegetative fermented liquid. The pH of the vegetative fermented liquid in each of the Examples and Comparative Examples was as shown in Tables 1 to 4 (refer to "Medium pH after Fermentation").

Note that the content of malic acid or fructose, and of milk (as a non-fat solid content) shown in Tables 1 to 4, and the content of glutamic acid shown in Tables 2 and 4 are described using the unit of "% by mass" in each medium. Also, the content of milk or glutamic acid denoted by "×" indicates that no milk or glutamic acid was added to the medium.

### • Adjustment of pH of Vegetative Fermented Liquid

Citric acid as a pH adjustor was dissolved in distilled water so as to be 40% by mass, and this was sterilized in an autoclave at 121°C for 15 minutes. Then, by using the sterilized citric acid aqueous solution, the pH of the vegetative fermented liquid was adjusted to those shown in Tables 1 to 4 (refer to "Adjusted pH after Fermentation"), and the vegetative fermented liquid for each of Examples and Comparative Examples was obtained. After that, each pH adjusted vegetative fermented liquid was placed in a container and preserved at 10°C for three weeks.

Note that in some of the Comparative Examples, the vegetative fermented liquid was just kept at 10°C for three weeks without carrying out the pH adjustment thereof. Such cases are denoted by "×" in the section of "pH Adjustment after Fermentation" in Tables 2 and 4.

### • Evaluation of Characteristics

The vegetative fermented liquid immediately after adjusting the pH thereof (immediately after the completion of incubation if no pH adjustment was carried out) was preserved in a freezer. Then, this was thawed and characteristics thereof were compared with those of the above-mentioned fermentation liquid which was preserved at 10°C, and evaluated by 25 men and 25 women in total (Evaluation 1).

Also, the above-mentioned fermentation liquid which was preserved at 10°C in each of the Examples and Comparative Examples was compared and evaluated by 25 men and 25 women in total (Evaluation 2).

Results are shown in Tables 1 to 4. Note that the number of living cells of *Lactobacillus brevis* in the vegetative fermented liquid immediately after the fermentation and after the preservation is also shown in Tables 1 to 4.

In the following, characteristics of the production method in each of the Examples and Comparative Examples will be explained.

### (Examples 1-1 to 1-13)

In these Examples, the pH and the malic acid content of carrot juice (Examples 1-1 to 1-6, 1-10 to 1-13) and clear carrot juice (Examples 1-7 to 1-9), which were used as the vegetative raw material, were adjusted to be those shown in Table 1, and then the Brix. thereof was adjusted to 12% (Examples 1-1 to 1-12) or 7% (Example 1-13) to prepare the fermentation medium. Then, the fermentation of the medium was carried out by using *Lactobacillus brevis* BP-4693. Example 1-2 was used as Standard 1, Example 1-5 was used as Standard 2, Example 1-8 was used as Standard 3, Example 1-11 was used as Standard 4, and Example 1-13 was used as Standard 5.

### (Examples 2-1 to 2-4)

In these Examples, each fermentation medium was prepared by adding milk to the medium in an amount, as a non-fat solid content, shown in Table 1. Example 2-2 was used as Standard 6.

### (Examples 3-1 to 3-3)

In these Examples, the pH of the vegetative fermented liquid was adjusted to be 3.3 to 4.1 as shown in Table 1, and the liquid was preserved.

### (Examples 4-1 to 4-3)

In these Examples, each fermentation medium was prepared by adding 3% by mass of milk as a non-fat solid content, and the pH of the vegetative fermented liquid was adjusted to be 3.3 to 4.1 as shown in Table 2.

### (Example 5)

In this Example, fermentation was performed by using *Lactobacillus brevis* JCM 1059 strain. This Example was used as Standard 7.

### (Example 6)

In this Example, the fermentation medium was prepared by adding 3.0% by mass of milk as a non-fat solid content, and the fermentation thereof was carried out by using *Lactobacillus brevis* JCM 1059. This Example was used as Standard 8.

### (Comparative Examples 1 and 2)

In these Comparative examples, vegetative fermented liquid was preserved without adjusting the pH thereof. In Comparative Example 2, in particular, the time period for fermentation was extended to 108 hours so that the degree of fermentation proceeded to make the pH of the vegetative fermented liquid 4.0.

### (Comparative Examples 3-1 to 3-6)

In these Comparative Examples, each fermentation medium was prepared so as to include a malic acid content of 0.2% by mass or less (Comparative Example 3-1), of 2.0% by mass or more (Comparative Example 3-2), or the pH thereof was adjusted to be 4.6 or lower (Comparative Examples 3-3 and 3-5) or 7.0 or higher (Comparative Examples 3-4 and 3-6), and the fermentation process thereof was carried out. In particular, the Brix. in the fermentation medium of Comparative Example 3-1 was adjusted to be 7%.

### (Comparative Example 4)

In this Comparative Example, the pH of the vegetative fermented liquid was adjusted to be 3.3 or lower, and the liquid was preserved.

### (Comparative Example 5)

In this Comparative Example, the pH of the vegetative fermented liquid was adjusted to be 4.1 or higher, and the liquid was preserved.

### (Comparative Example 6)

In this Comparative Example, the fermentation medium was prepared by adding 3.0% by mass of milk as a non-fat solid content, and the pH of the vegetative fermented liquid was adjusted to be 3.3 or lower and the liquid was preserved.

### (Comparative Example 7)

In this Comparative Example, the fermentation medium was prepared by adding 3.0% by mass of milk as a non-fat solid content, and the pH of the vegetative fermented liquid was adjusted to be 4.1 or higher and the liquid was preserved.

### (Comparative Example 8)

In this Comparative Example, the fermentation medium was prepared by adding 0.3% by mass of glutamic acid.

### (Comparative Example 9)

In this Comparative Example, the fermentation medium was prepared by adding 3.0% by mass of milk as a non-fat solid content, and 0.3% by mass of glutamic acid.

### (Comparative Example 10)

In this Comparative Example, fermentation was performed by using *Lactobacillus brevis* JCM 1059, and the vegetative fermented liquid was preserved without adjusting the pH thereof.

### (Comparative Example 11)

In this Comparative Example, the fermentation medium was prepared by adding 3.0% by mass of milk as a non-fat solid content, and fermentation was performed by using *Lactobacillus brevis* JCM 1059. The vegetative fermented liquid was preserved without adjusting the pH thereof.

### (Examples 1'-1 to 1'-10)

In these Examples, the pH and the fructose content of tomato juice (Examples 1'-1 to 1'-3, 1'-7 to 1'-10) and clear tomato juice (Examples 1'-4 to 1'-6), which were used as the vegetative raw material, were adjusted to be those shown in Table 3, and then the Brix. thereof was adjusted to 12% (Examples 1'-1 to 1'-9) or 5% (Example 1'-10) to prepare the fermentation medium. Then, the fermentation of the medium was carried out by using *Lactobacillus brevis* BP-4693. Example 1'-2 was used as Standard 1', Example 1'-5 was used as Standard 2', Example 1'-8 was used as Standard 3', and Example 1'-10 was used as Standard 4'.

### (Examples 2'-1 to 2'-4)

In these Examples, each fermentation medium was prepared by adding milk to the medium in an amount, as a non-fat solid content, shown in Table 3. Example 2'-2 was used as Standard 5'.

### (Examples 3'-1 to 3'-3)

In these Examples, the pH of the vegetative fermented liquid was adjusted to be 3.3 to 4.1 as shown in Table 3, and the liquid was preserved.

### (Examples 4'-1 to 4'-3)

In these Examples, each fermentation medium was prepared by adding 3% by mass of milk as a non-fat solid content, and the pH of the vegetative fermented liquid was adjusted to be 3.3 to 4.1 as shown in Table 3.

### (Example 5')

In this Example, fermentation was performed by using *Lactobacillus brevis* JCM 1059. This Example was used as Standard 6'.

### (Example 6')

In this Example, the fermentation medium was prepared by adding 3.0% by mass of milk as a non-fat solid content, and the fermentation thereof was carried out by using *Lactobacillus brevis* JCM 1059. This Example was used as Standard 7'.

### (Comparative Examples 1' and 2')

In these Comparative examples, vegetative fermented liquid was preserved without adjusting the pH thereof. In Comparative Example 2', in particular, the time period for fermentation was extended to 108 hours so that the degree of fermentation proceeded to make the pH of the vegetative fermented liquid 4.0.

### (Comparative Examples 3'-1 to 3'-6)

In these Comparative Examples, each fermentation medium was prepared so as to include a fructose content of 2.0% by mass or less (Comparative Example 3'-1), of 20.0% by mass or more (Comparative Example 3'-2), or the pH thereof was adjusted to be 4.6 or lower (Comparative Examples 3'-3 and 3'-5) or 7.0 or higher (Comparative Examples 3'-4 and 3'-6), and the fermentation process thereof was carried out. In particular, the Brix. in the fermentation medium of Comparative Example 3'-1 was adjusted to be 5%.

### (Comparative Example 4')

In this Comparative Example, the pH of the vegetative fermented liquid was adjusted to be 3.3 or lower, and the liquid was preserved.

### (Comparative Example 5')

In this Comparative Example, the pH of the vegetative fermented liquid was adjusted to be 4.1 or higher, and the liquid was preserved.

### (Comparative Example 6')

In this Comparative Example, the fermentation medium was prepared by adding 3.0% by mass of milk as a non-fat solid content, and the pH of the vegetative fermented liquid was adjusted to be 3.3 or lower and the liquid was preserved.

### (Comparative Example 7')

In this Comparative Example, the fermentation medium was prepared by adding 3.0% by mass of milk as a non-fat solid content, and the pH of the vegetative fermented liquid was adjusted to be 4.1 or higher and the liquid was preserved.

### (Comparative Example 8')

In this Comparative Example, the fermentation medium was prepared by adding 0.3% by mass of glutamic acid.

### (Comparative Example 9')

In this Comparative Example, the fermentation medium was prepared by adding 3.0% by mass of milk as a non-fat solid content, and 0.3% by mass of glutamic acid.

### (Comparative Example 10')

In this Comparative Example, fermentation was performed by using *Lactobacillus brevis* JCM 1059, and the vegetative fermented liquid was preserved without adjusting the pH thereof.

### (Comparative Example 11')

In this Comparative Example, the fermentation medium was prepared by adding 3.0% by mass of milk as a non-fat solid content, and fermentation was performed by using *Lactobacillus brevis* JCM 1059. The vegetative fermented liquid was preserved without adjusting the pH thereof.

### • Results of Evaluation

From the results of Examples 1-1 to 1-12, no significant differences in the characteristic evaluations were observed between the cryopreserved samples and the samples preserved at 10°C. Also, no significant differences were present in the characteristic evaluation between the samples in which the pH of the vegetative fermented liquid was 4.4 or 6.8 and the samples of Standards 1 to 4 in which the pH of the vegetative fermented liquid was 4.8, for the cases in which the malic acid content of the fermentation medium was 0.3, 0.5, 1.0, or 1.8% by mass, and it was confirmed that all samples had excellent taste, flavor, and preservability.

Moreover, although the taste, flavor, and preservability of any of samples of Standard 1 to 4 were excellent, the sample of Standard 1, in which the malic acid content in the fermentation medium was 0.3% by mass and had the least amount of carbonic acid content in the vegetative fermented liquid, was found to be most preferable in terms of its characteristics with less stimulation to the tongue. The samples other than that of Standard 1 were ranked as Standard 2, Standard 3, and Standard 4 in order of preference.

On the other hand, from the results of Example 1-13, no significant differences in the characteristic evaluation were observed between the cryopreserved samples and the samples preserved at 10°C for the case in which Brix. was 7%.

From the results of Examples 2-1 to 2-4, no significant differences in the characteristic evaluation were observed between the cryopreserved samples and the samples preserved at 10°C when the amount of milk added to the fermentation medium was changed in the range of 0.2 to 20.0% by mass as a non-fat solid content, and it was confirmed that all samples had excellent taste, flavor, and preservability.

From the results of Examples 3-1 to 3-3, no significant differences in the characteristic evaluation were observed between the cryopreserved samples and the samples preserved at 10°C when the pH of the vegetative fermented liquid was adjusted in the range of 3.3 to 4.1, and it was confirmed that all samples had excellent taste, flavor, and preservability. Also, no significant differences were observed as compared to the sample of Standard 1 in which the pH of the vegetative fermented liquid was adjusted to be 4.0.

From the results of Examples 4-1 to 4-3, no significant differences in the characteristic evaluation were observed between the cryopreserved samples and the samples preserved at 10°C when 3.0% by mass of milk as a non-fat solid content was added to the fermentation medium and the pH of the vegetative fermented liquid was adjusted in the range of 3.3 to 4.1, and it was confirmed that all samples had excellent taste, flavor, and preservability. Also, no significant differences were observed as compared to the sample of Standard 6 in which the pH of the vegetative fermented liquid was adjusted to be 4.0.

From the results of Examples 5 and 6, no significant differences in the characteristic evaluation were observed between the cryopreserved samples and the samples preserved at 10°C when the fermentation was carried out by using *Lactobacillus brevis* JCM 1059 regardless of the addition of milk to the fermentation medium, and it was confirmed that all samples had excellent taste, flavor, and preservability.

With regard to the sample of Comparative Example 1, significant differences in the characteristic evaluation were observed between the cryopreserved samples and the samples preserved at 10°C, and those were also observed as compared to the sample of Standard 1. Taste and flavor thereof were not satisfactory. This was because, as is obvious from the number of cells immediately after fermentation and that after preservation, the fermentation had proceeded during the preservation since the vegetative fermented liquid was preserved at the pH of 4.8 which was unadjusted.

Also, with regard to the sample of Comparative Example 2, although no significant differences in the characteristic evaluation were observed between the cryopreserved samples and the samples preserved at 10°C, differences were observed, similar to the sample of Comparative Example 1, as compared to the sample of Standard 1. Taste and flavor thereof were already not satisfactory at the stage immediately after the fermentation. This was due to the high degree of fermentation of the vegetative fermented liquid.

With regard to the samples of Comparative Examples 3-1 to 3-6, although no significant differences in the characteristic evaluation were observed between the cryopreserved samples and the samples preserved at 10°C, differences were observed for the sample of Comparative Example 3-1 as compared to the sample of Standard 5, and for the sample of Comparative Example 3-2 as compared to the sample of Standard 1. Taste and flavor thereof were already not satisfactory at the stage prior to the preservation. This was because the content of malic acid in the fermentation medium was outside of the range of 0.2 to 2.0% by mass. The cause of this in Comparative Example 3-1 is the low degree of fermentation due to the low content of malic acid as is obvious from the number of cells immediately after the fermentation, and the cause in Comparative Example 3-2 is the larger amount of salt byproduct produced due to a larger amount of potassium carbonate being used for adjusting the pH of the medium prior to the fermentation, which had a high content of malic acid.

Also, the samples of Comparative Examples 3-3 and 3-4 showed a significant difference in the characteristic evaluation as compared to the sample of Standard 1, and the samples of Comparative Examples 3-5 and 3-6 showed a significant difference in the characteristic evaluation as compared to the sample of Standard 4. Taste and flavor thereof were already not satisfactory at the stage prior to the preservation. This was due to the pH of the fermentation medium prior to the fermentation being outside the range of 4.6 to 7.0. As is obvious from the number of cells immediately after the fermentation, the degree of fermentation in Comparative Examples 3-3 and 3-5 was low due to the low pH value. Also, as is obvious from the number of cells immediately after the fermentation, the degree of fermentation in Comparative Examples 3-4 and 3-6 was low due to the high pH value, and the larger amount of salt byproduct produced due to a larger amount of potassium carbonate being used for adjusting the pH of the medium prior to the fermentation and of citric acid used for adjusting the pH of the vegetative fermentation liquid.

With regard to the sample of Comparative Example 4, although no significant differences in the characteristic evaluation were observed between the cryopreserved sample and the sample preserved at 10°C, diferences were observed as compared to the sample of Standard 1. Taste and flavor thereof were already not satisfactory at the stage prior to the preservation. Similarly, taste and flavor of the sample of Comparative Example 6 were already not satisfactory at the stage prior to the preservation.

On the other hand, with regard to the sample of Comparative Example 5, significant differences in the characteristic evaluation were observed between the cryopreserved sample and the sample preserved at 10°C, and differences were also observed as compared to the sample of Standard 1. Accordingly, it was confirmed that the taste and flavor thereof were changed during the preservation. Similarly, with regard to the sample of Comparative Example 7, significant differences in the characteristic evaluation were observed as compared to the sample of Standard 6. Accordingly, it was confirmed that taste and flavor thereof were changed during the preservation.

This was due to the adjusted pH of the vegetative fermentation liquid, regardless of the addition of milk to the fermentation medium, which was outside the range of 3.3 to 4.1. In Comparative Examples 4 and 6, the acidity of the sample became too strong at the stage prior to the preservation due to the low pH thereof. In addition to that, the number of living cells was also decreased during the preservation in those Comparative Examples. On the other hand, in Comparative Examples 5 and 7, fermentation thereof progressed too far during the preservation due to the high pH.

With regard to the samples of Comparative Examples 8 and 9, although no significant differences in the characteristic evaluation were observed between the cryopreserved sample and the sample preserved at 10°C, differences were observed for the sample of Comparative Example 8 as compared to the sample of Standard 1, and for the sample of Comparative Example 9 as compared to the sample of Standard 6. Taste and flavor thereof were already not satisfactory at the stage prior to the preservation. This was due to the remaining glutamic acid in the vegetative fermentation liquid which was added to the fermentation medium, regardless of the addition of milk to the fermentation medium, and to the production of γ-amino lactic acid (GABA) by *Lactobacillus brevis* BP-4693 during the fermentation.

With regard to the sample of Comparative Example 10, significant differences in the characteristic evaluation were observed between the cryopreserved sample and the sample preserved at 10°C, and differences were also observed as compared to the sample of Standard 7. Moreover, with regard to the sample of Comparative Example 11, significant differences in the characteristic evaluation were observed between the cryopreserved sample and the sample preserved at 10°C, and differences were also observed as compared to the sample of Standard 8. Accordingly, it was confirmed that the taste and flavor thereof were changed during the preservation. This was caused by the progress of fermentation during the preservation since, although *Lactobacillus brevis* BPJCM1059 was used, the vegetative fermentation liquid was preserved without adjusting the pH thereof.

From the results of Examples 1'-1 to 1'-9, no significant differences in the characteristic evaluations were observed between the cryopreserved samples and the samples preserved at 10°C. Also, no significant differences were present in the characteristic evaluation between the samples in which the pH of the vegetative fermented liquid was 4.4 or 6.8 and the samples of Standards 1', 2' and 3' in which the pH of the vegetative fermented liquid was 4.8, for the cases in which the fructose content of the fermentation medium was 2.5, 10.0, or 18.0% by mass, and it was confirmed that all samples had excellent taste, flavor, and preservability.

On the other hand, from the results of Example 1'-10, no significant differences in the characteristic evaluation were observed between the cryopreserved samples and the samples preserved at 10°C for the case in which Brix. was 5%.

From the results of Examples 2'-1 to 2'-4, no significant differences in the characteristic evaluation were observed between the cryopreserved samples and the samples preserved at 10°C when the amount of milk added to the fermentation medium was changed in the range of 0.2 to 20.0% by mass as a non-fat solid content, and it was confirmed that all samples had excellent taste, flavor, and preservability.

From the results of Examples 3'-1 to 3'-3, no significant differences in the characteristic evaluation were observed between the cryopreserved samples and the samples preserved at 10°C when the pH of the vegetative fermented liquid was adjusted in the range of 3.3 to 4.1, and it was confirmed that all samples had excellent taste, flavor, and preservability. Also, no significant differences were observed as compared to the sample of Standard 1' in which the pH of the vegetative fermented liquid was adjusted to be 4.0.

From the results of Examples 4'-1 to 4'-3, no significant differences in the characteristic evaluation were observed between the cryopreserved samples and the samples preserved at 10°C when 3.0% by mass of milk as a non-fat solid content was added to the fermentation medium and the pH of the vegetative fermented liquid was adjusted in the range of 3.3 to 4.1, and it was confirmed that all samples had excellent taste, flavor, and preservability. Also, no significant differences were observed as compared to the sample of Standard 5' in which the pH of the vegetative fermented liquid was adjusted to be 4.0.

From the results of Examples 5' and 6', no significant differences in the characteristic evaluation were observed between the cryopreserved samples and the samples preserved at 10°C when the fermentation was carried out by using *Lactobacillus brevis* JCM 1059 regardless of the addition of milk to the fermentation medium, and it was confirmed that all samples had excellent taste, flavor, and preservability.

With regard to the sample of Comparative Example 1', significant differences in the characteristic evaluation were observed between the cryopreserved samples and the samples preserved at 10°C, and those were also observed as compared to the sample of Standard 1'. Taste and flavor thereof were not satisfactory. This was because, as is obvious from the number of cells immediately after fermentation and that after preservation, the fermentation had proceeded during the preservation since the vegetative fermented liquid was preserved at the pH of 4.8 which was unadjusted.

Also, with regard to the sample of Comparative Example 2', although no significant differences in the characteristic evaluation were observed between the cryopreserved samples and the samples preserved at 10°C, differences were observed, similar to the sample of Comparative Example 1', as compared to the sample of Standard 1'. Taste and flavor thereof were already not satisfactory at the stage immediately after the fermentation. This was due to the high degree of fermentation of the vegetative fermented liquid.

With regard to the samples of Comparative Examples 3'-1 to 3'-6, although no significant differences in the characteristic evaluation were observed between the cryopreserved samples and the samples preserved at 10°C, differences were observed for the sample of Comparative Example 3'-1 as compared to the sample of Standard 4', and for the sample of Comparative Example 3'-2 as compared to the sample of Standard 1'. Taste and flavor thereof were already not satisfactory at the stage prior to the preservation. This was because the content of fructose in the fermentation medium was outside of the range of 2.0 to 20.0% by mass. The cause of this in Comparative Example 3'-1 is the low degree of fermentation due to the low content of fructose as is obvious from the number of cells immediately after the fermentation, and the cause in Comparative Example 3'-2 is the large amount of fructose which gives too much sweetness.

Also, the samples of Comparative Examples 3'-3 and 3'-4 showed a significant difference in the characteristic evaluation as compared to the sample of Standard 1', and the samples of Comparative Examples 3'-5 and 3'-6 showed a significant difference in the characteristic evaluation as compared to the sample of Standard 3'. Taste and flavor thereof were already not satisfactory at the stage prior to the preservation. This was due to the pH of the fermentation medium prior to the fermentation being outside the range of 4.6 to 7.0. As is obvious from the number of cells immediately after the fermentation, the degree of fermentation in Comparative Examples 3'-3 and 3'-5 was low due to the high pH value. Also, as is obvious from the number of cells immediately after the fermentation, the degree of fermentation in Comparative Examples 3'-4 and 3'-6 was low due to the low pH value, and the larger amount of salt byproduct produced due to a larger amount of potassium carbonate being used for adjusting the pH of the medium prior to the fermentation and of citric acid used for adjusting the pH of the vegetative fermentation liquid.

With regard to the sample of Comparative Example 4', although no significant differences in the characteristic evaluation were observed between the cryopreserved sample and the sample preserved at 10°C, diferences were observed as compared to the sample of Standard 1'. Taste and flavor thereof were already not satisfactory at the stage prior to the preservation. Similarly, taste and flavor of the sample of Comparative Example 6' were already not satisfactory at the stage prior to the preservation.

On the other hand, with regard to the sample of Comparative Example 5', significant differences in the characteristic evaluation were observed between the cryopreserved sample and the sample preserved at 10°C, and differences were also observed as compared to the sample of Standard 1'. Accordingly, it was confirmed that the taste and flavor thereof were changed during the preservation. Similarly, with regard to the sample of Comparative Example 7', significant differences in the characteristic evaluation were observed as compared to the sample of Standard 5'. Accordingly, it was confirmed that taste and flavor thereof were changed during the preservation.

This was due to the adjusted pH of the vegetative fermentation liquid, regardless of the addition of milk to the fermentation medium, which was outside the range of 3.3 to 4.1. In Comparative Examples 4' and 6', the acidity of the sample became too strong at the stage prior to the preservation due to the low pH thereof. In addition to that, the number of living cells was also decreased during the preservation in those Comparative Examples. On the other hand, in Comparative Examples 5' and 7', fermentation thereof progressed too far during the preservation due to the high pH.

With regard to the samples of Comparative Examples 8' and 9', although no significant differences in the characteristic evaluation were observed between the cryopreserved sample and the sample preserved at 10°C, differences were observed for the sample of Comparative Example 8' as compared to the sample of Standard 1', and for the sample of Comparative Example 9' as compared to the sample of Standard 5'. Taste and flavor thereof were already not satisfactory at the stage prior to the preservation. This was due to the remaining glutamic acid in the vegetative fermentation liquid which was added to the fermentation medium, regardless of the addition of milk to the fermentation medium, and to the production of γ-amino lactic acid (GABA) by *Lactobacillus brevis* BP-4693 during the fermentation.

With regard to the sample of Comparative Example 10', significant differences in the characteristic evaluation were observed between the cryopreserved sample and the sample preserved at 10°C, and differences were also observed as compared to the sample of Standard 6'. Moreover, with regard to the sample of Comparative Example 11', significant differences in the characteristic evaluation were observed between the cryopreserved sample and the sample preserved at 10°C, and differences were also observed as compared to the sample of Standard 7'. Accordingly, it was confirmed that the taste and flavor thereof were changed during the preservation. This was caused by the progress of fermentation during the preservation since, although *Lactobacillus brevis* BPJCM1059 was used, the vegetative fermentation liquid was preserved without adjusting the pH thereof.

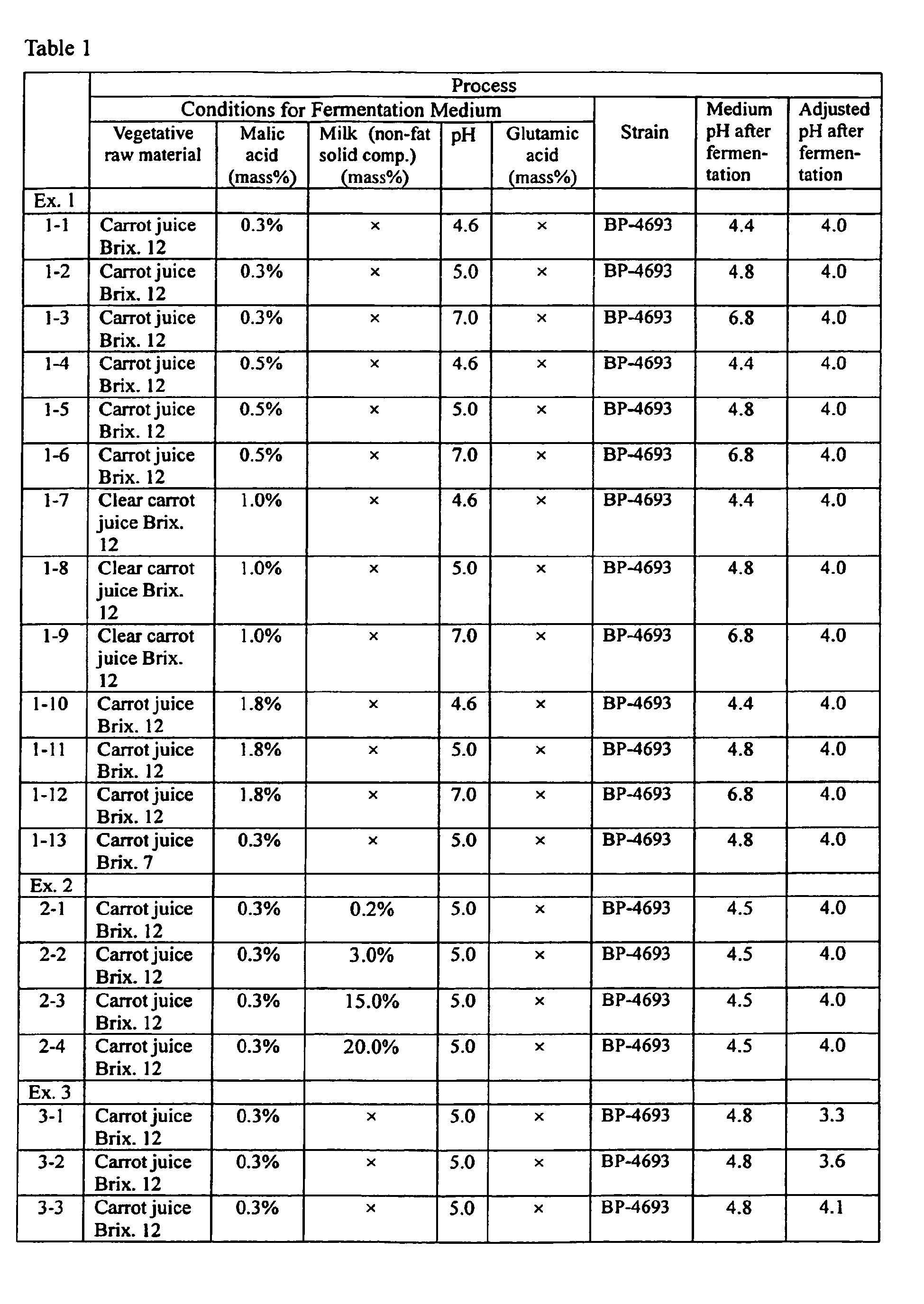

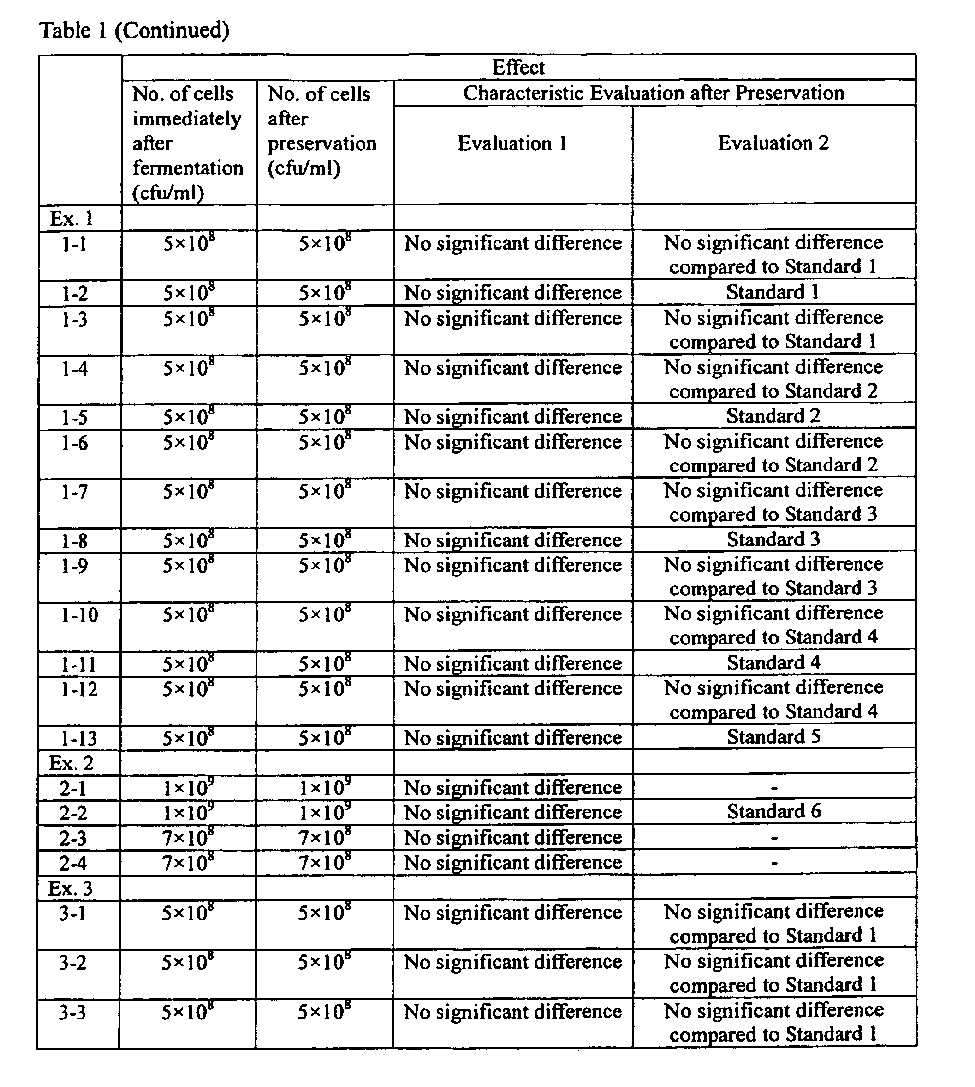

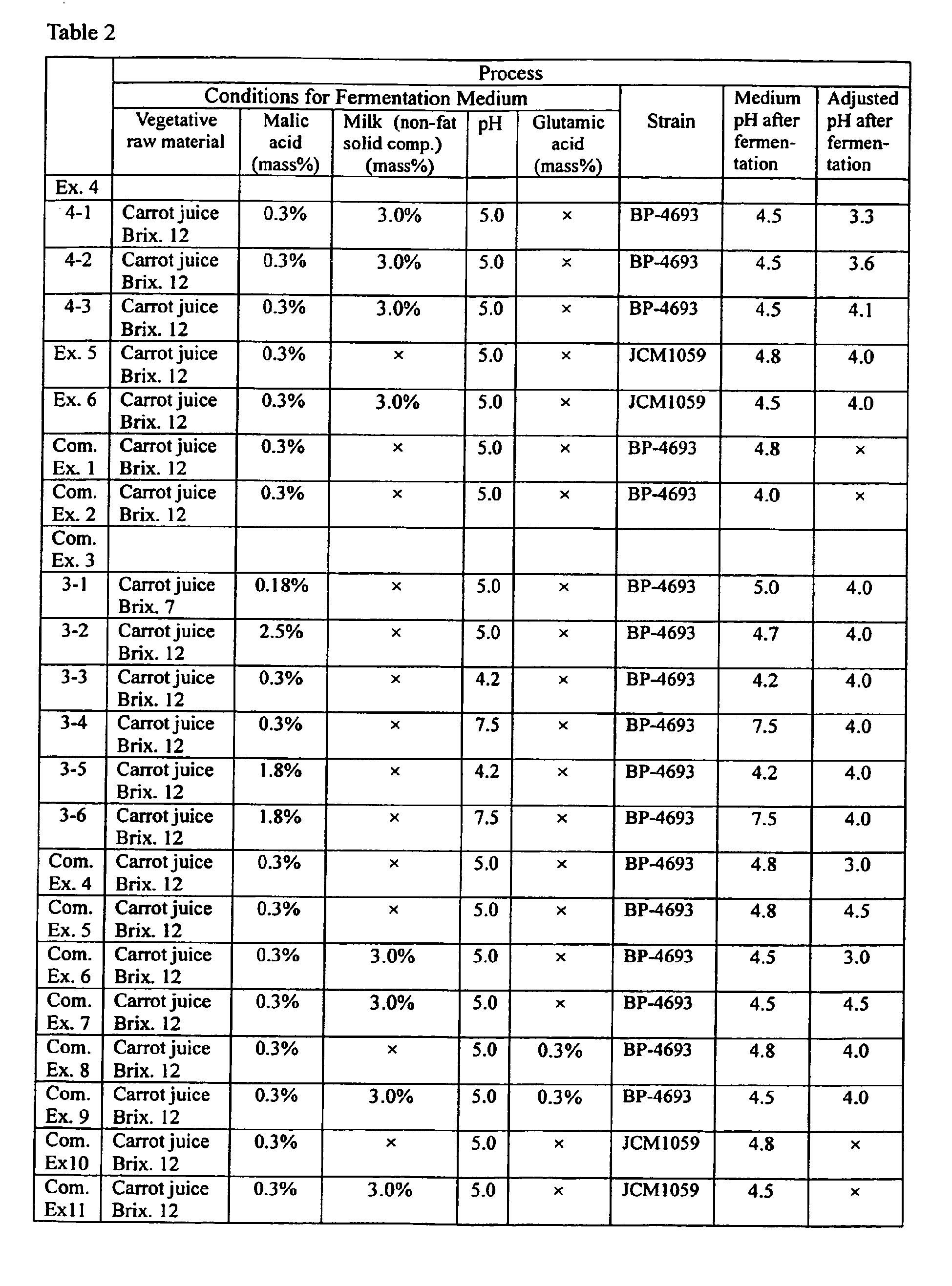

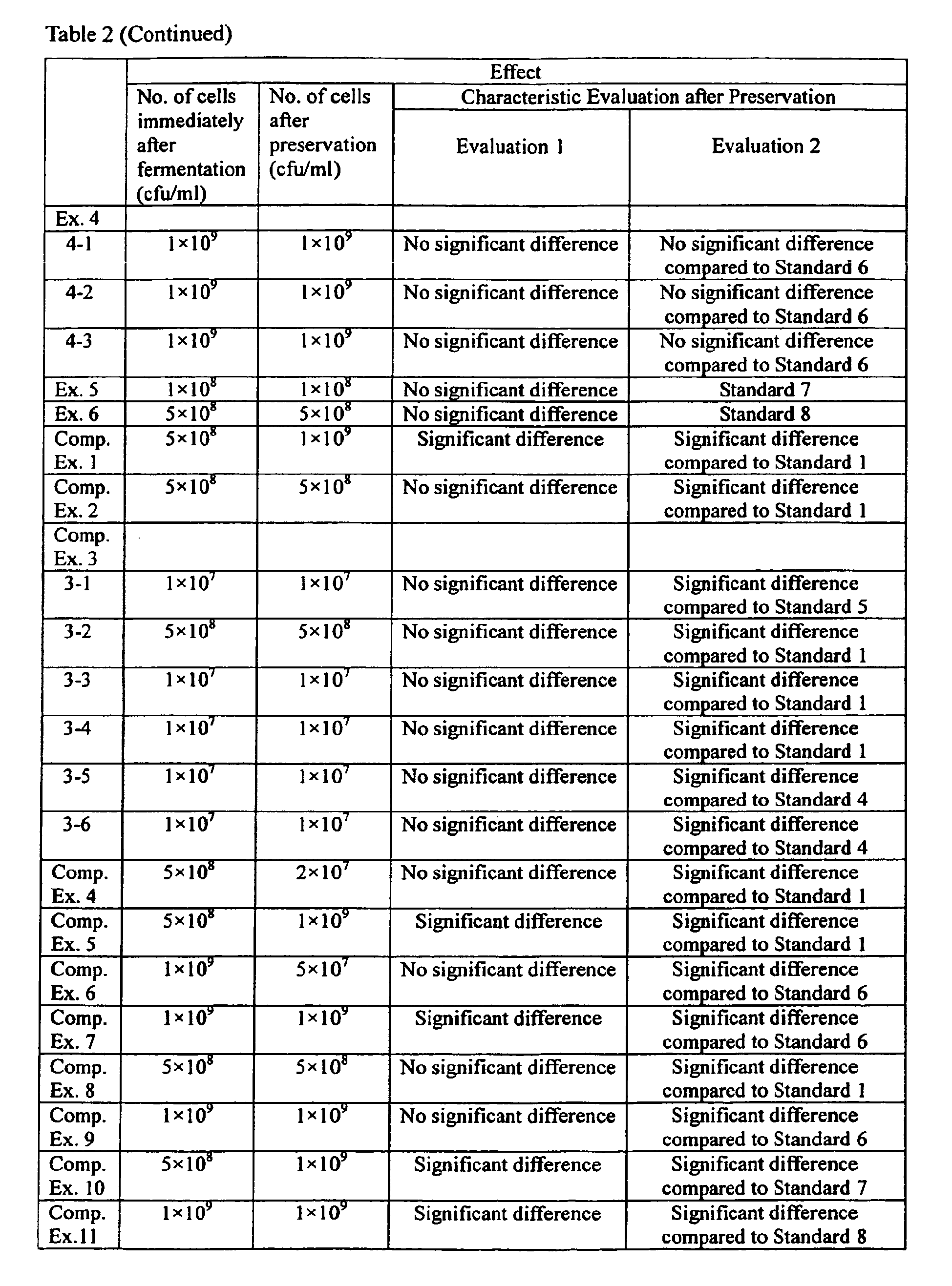

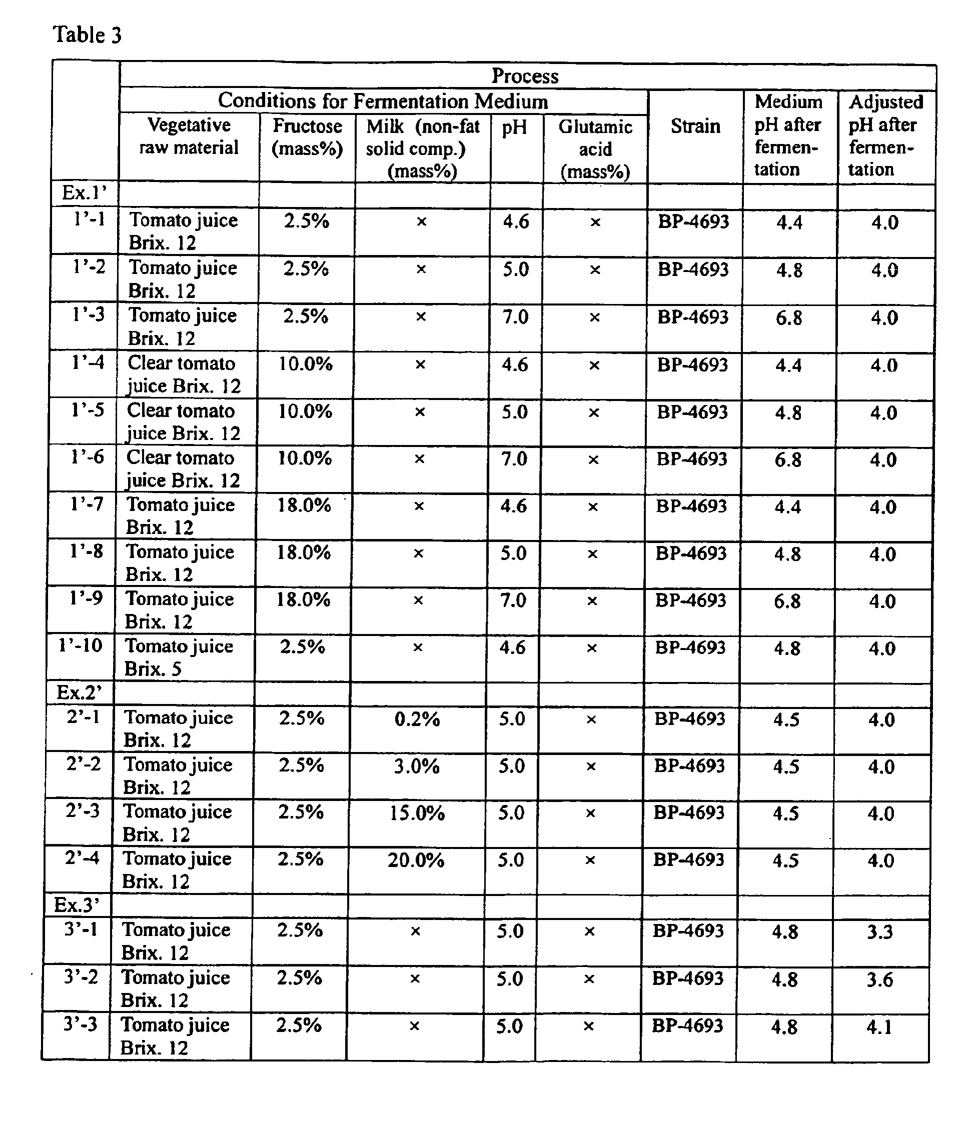

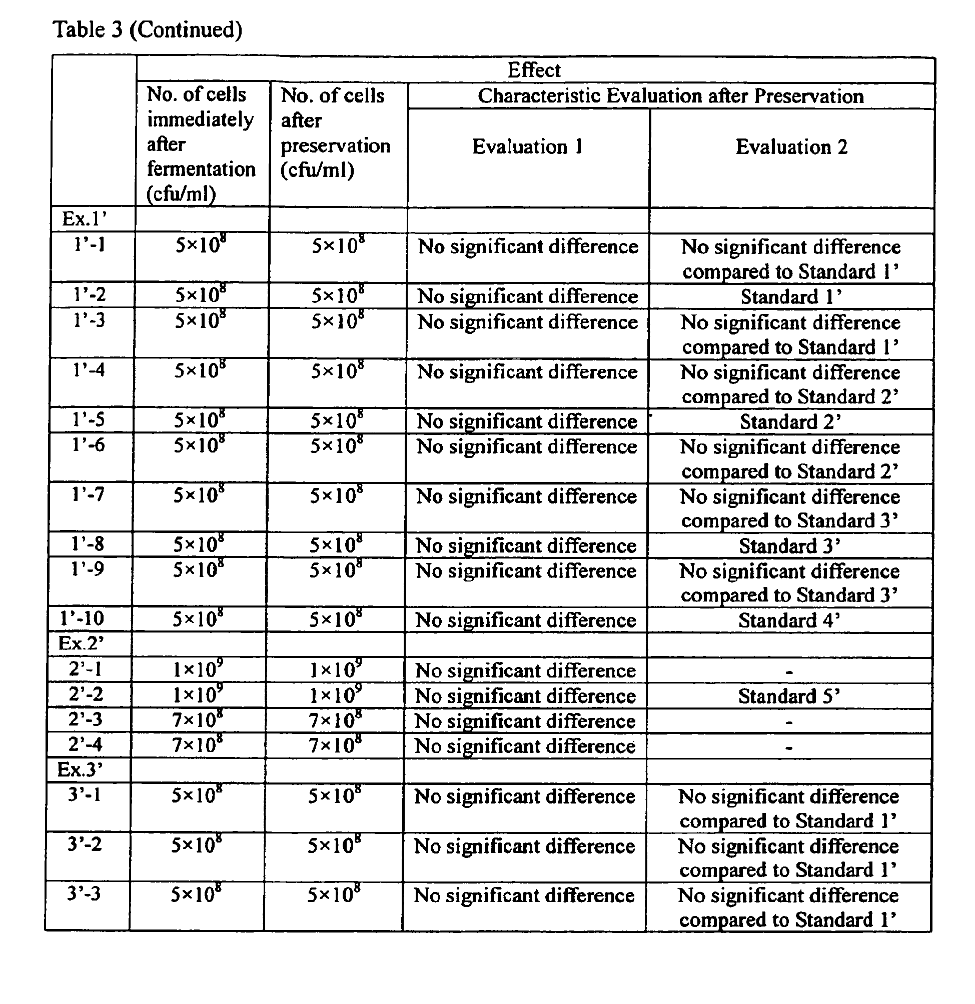

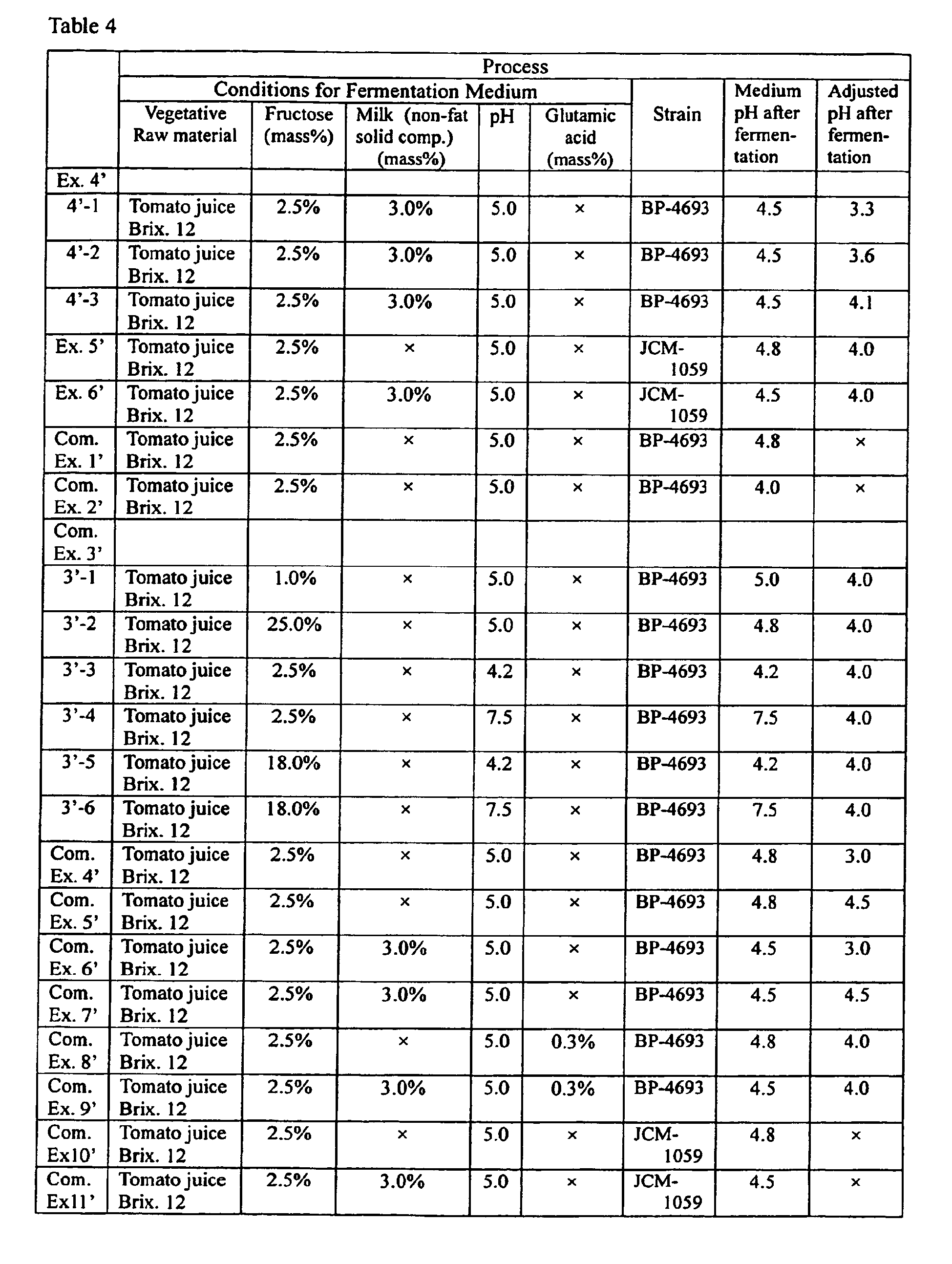

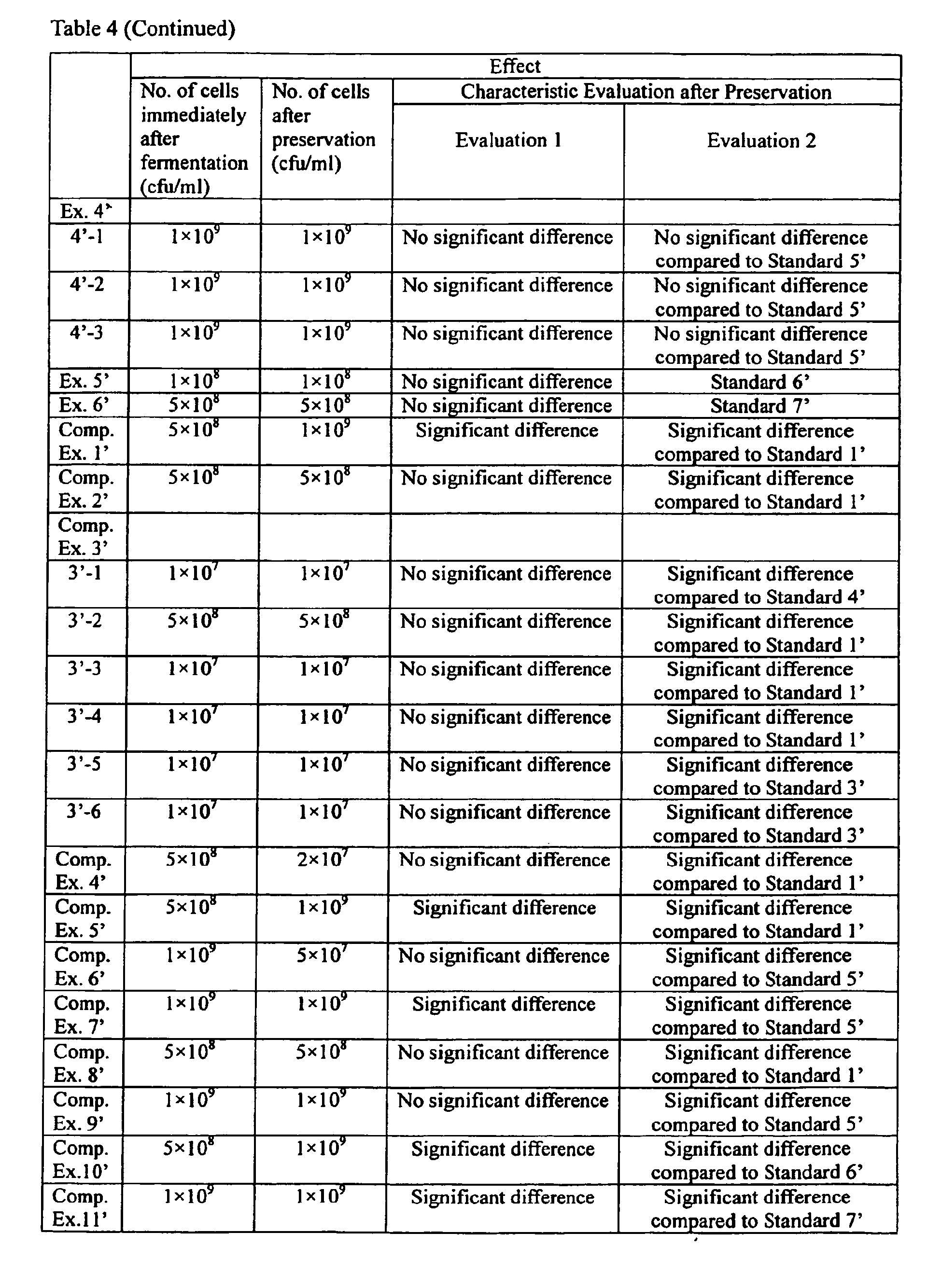

From the results shown above, it was confirmed that the fermented food or drink product produced by the method of the present invention has excellent taste and flavor, and possesses a number of living cells of *Lactobacillus brevis* of 1×10⁸ cfu/ml or greater. Also, the number of living cells does not change after being preserved at 10°C for three weeks, and the excellent taste and flavor of the fermented food or drink do not change.

### Industrial Applicability

According to the present invention, it becomes possible to provide a fermented food or drink having excellent taste, flavor, and preservability, which contains living cells of lactic acid bacteria to improve health.

Having thus described exemplary embodiments of the invention, it will be apparent that various alterations, modifications, and improvements will readily occur to those skilled in the art. Such alterations, modifications, and improvements, though not expressly described above, are nonetheless intended and implied to be within the spirit and scope of the invention. Accordingly, the foregoing discussion is intended to be illustrative only: the invention is limited and defined only by the following claims and equivalents thereto.

## Claims

1. A method for producing a fermented food or drink product, **characterized in that** the method comprises:
adding a strain of lactic acid bacteria which belongs to *Lactobacillus brevis* to a medium whose pH has been adjusted to 4.6 to 7.0, said medium including: a vegetative raw material in an amount of 50% or more converted to a juice thereof; and 0.2 to 2.0% by mass of malic acid or 2.0 to 20.0% by mass of fructose, in order to ferment said medium so that the pH of said medium becomes 4.3 or greater and less than 7.0; and
adjusting the pH of a fermented product to 3.3 to 4.1 by using an acid.

2. The method for producing a fermented food or drink product according to claim 1, **characterized in that** the method further comprises: lowering the temperature of said fermented product.

3. The method for producing a fermented food or drink product according to claim 1 or claim 2, **characterized in that** said strain of lactic acid bacteria which belongs to *Lactobacillus brevis* is *Lactobacillus brevis* FERM BP4693 strain.

4. The method for producing a fermented food or drink product according to any one of Claims 1 to 3, **characterized in that** said medium further includes 0.1 to 20% by mass, as a non-fat solid content, of milk

5. The method for producing a fermented food or drink product according to any one of claims 1 to 4, **characterized in that** said medium contains 0.2 to 0.45% by mass of malic acid.

6. A fermented food or drink product **characterized in that** said product is produced by the method described in any one of claims 1 to 5.

7. A fermented food or drink product according to Claim 6, **characterized in that** said product is used for animal feed.

## Patentansprüche

1. Verfahren für die Herstellung eines fermentierten Lebenamittel- oder Getränkeprodukts, **dadurch gekennzeichnet, dass** das Verfahren Folgendes umfasst:
Hinzufügen eines Stamms von Milchsäurebakterien, welcher zu *Lactobacillus brevis* gehört, zu einem Medium, dessen pH-Wert auf 4,6 bis 7,0 eingestellt wurde, wobei das Medium Folgendes einschließt: ein pflanzliches Rohmaterial in einer Menge von 50 % oder mehr, umgewandelt zu einem Saft davon; und 0,2 bis 2,0 Massen-% Äpfelsäure oder 2,0 bis 20,0 Massen-% Fructose, um das Medium zu fermentieren, sodass der pH-Wert des Mediums 4,3 oder größer und weniger als 7,0 wird; und
Einstellen des pH-Wertes eines fermentierten Produkts auf 3,3 bis 4,1 unter Verwendung einer Säure.

2. Verfahren für die Herstellung eines fermentierten Lebensmittel- oder Getränkeprodukts gemäß Anspruch 1, **dadurch gekennzeichnet, dass** das Verfahren weiterhin das Absenken der Temperatur des fermentierten Produkts umfasst.

3. Verfahren für die Herstellung eines fermentierten Lebensmittel- oder Getränkeprodukts gemäß Anspruch 1 oder Anspruch 2, **dadurch gekennzeichnet, dass** der Stamm von Milchsäurebakterien, welcher zu *Lactobacillus brevis* gehört, ein *Lactobacillus brevis*-FERM BP4693-Stamm ist.

4. Verfahren für die Herstellung eines fermentierten Lebensmittel- oder Getränkeprodukts gemäß einem beliebigen der Ansprüche 1 bis 3, **dadurch gekennzeichnet, dass** das Medium weiter 0,1 bis 20 Massen-% als einen Nicht-Fett-Feststoffgehalt von Milch einschließt.

5. Verfahren für die Herstellung eines fermentierten Lebensmittel- oder Getränkeprodukts gemäß einem beliebigen der Ansprüche 1 bis 4, **dadurch gekennzeichnet, dass** das Medium 0,2 bis 0,45 Massen-% Äpfelsäure enthält.

6. Fermentiertes Lebensmittel- oder Getränkeprodukt, **dadurch gekennzeichnet, dass** das Produkt durch das in einem beliebigen der Ansprüche 1 bis 5 beschriebene Verfahren hergestellt wird.

7. Fermentiertes Lebensmittel- oder Getränkeprodukt gemäß Anspruch 6, **dadurch gekennzeichnet, dass** das Produkt für Futtermittel verwendet wird.

## Revendications

1. Procédé d'obtention d'un produit de boisson ou alimentaire fermenté, **caractérisé en ce que** le procédé comprend :
l'addition d'une souche de bactéries de l'acide lactique qui appartient à *Lactobacillus brevis* à un milieu dont le pH a été ajusté à raison de 4,6 à 7,0, ledit milieu incluant : une matière première végétale dans une quantité de 50 % ou plus convertie en un jus de celle-ci ; et 0,2 à 2,0 % en masse d'acide malique ou 2,0 à 20,0 % en masse de fructose, afin de fermenter ledit milieu de sorte que le pH dudit milieu devienne de 4,3 ou supérieur et inférieur à 7,0 ; et
l'ajustement du pH d'un produit fermenté à raison de 3,3 à 4,1 en utilisant un acide.

2. Procédé d'obtention d'un produit de boisson ou alimentaire fermenté selon la revendication 1, **caractérisé en ce que** le procédé comprend de plus : l'abaissement de la température dudit produit fermenté.

3. Procédé d'obtention d'un produit de boisson ou alimentaire fermenté selon la revendication 1 ou la revendication 2, **caractérisé en ce que** ladite souche de bactéries de l'acide lactique qui appartient à *Lactobacillus brevis* est la souche de *Lactobacillus brevis* FERM BP4693.

4. Procédé d'obtention d'un produit de boisson ou alimentaire fermenté selon l'une quelconque des revendications 1 à 3, **caractérisé en ce que** ledit milieu inclut de plus 0,1 à 20 % en masse de lait, exprimé en teneur en solides non gras.

5. Procédé d'obtention d'un produit de boisson ou alimentaire fermenté selon l'une quelconque des revendications 1 à 4, **caractérisé en ce que** ledit milieu contient 0,2 à 0,45 % en masse d'acide malique.

6. Produit de boisson ou alimentaire fermenté **caractérisé en ce que** ledit produit est obtenu à l'aide du procédé décrit dans l'une quelconque des revendications 1 à 5.

7. Produit de boisson ou alimentaire fermenté selon la revendication 6, **caractérisé en ce que** ledit produit est utilisé pour une alimentation animale.
